# EUROPEAN PATENT SPECIFICATION

(11) **EP 1 336 474 B1**
(45) Date of publication and mention of the grant of the patent: **15.09.2004**
(21) Application number: 02015500.8
(22) Date of filing: 12.07.2002
(51) Int. Cl.: B32B 27/32

(54) **Multiple-layer film to be hot coupled, either on-line and off-line or by an adhesive, to a support layer for food vessels and the like**
Mehrschichtfilm zum Heissverbinden entweder on-line oder off-line oder mittels eines Klebers mit einer Tragschicht für Lebensmittelbehälter und dergleichen
Film multicouches pour être connecté à chaud, ou bien en ligne, ou hors ligne ou par un adhésif avec une couche support pour récipients alimentaires et autres

(30) Priority: 19.02.2002 IT MI20020335
(43) Date of publication of application: 20.08.2003
(73) Proprietor: Silp Societa'Imballaggi Laminati Plastici S.R.L., 20133 Milano (IT)
(72) Inventor: De Micheli, Claudio, 20133 Milano (IT); Proserpio, Alberto, 20133 Milano (IT)
(74) Representative: Cicogna, Franco

(56) References cited:
- EP-A- 0 781 652

## Description

### BACKGROUND OF THE INVENTION

The present invention relates to a multiple-layer film according to the preamble of claim 1.

As is known, food packages, such as food pans, bags, envelopes and so on, are usually sealed, by a surface film coupled to the other components of the package by a hot type of coupling, or by a sealing adhesive.

In order to provide a tight package, both in the case of permanent sealing films and in that of peelable films, that is provided for facilitating the opening of the packaging, it is necessary to provide sufficiently clean coupling surfaces.

If the coupling surfaces are contaminated by any contaminating substances, such as powder, particles, fats, blood, serum and the like, caused by the packaged product or the processing thereof, the sealing cannot provide a sufficient tightness coupling.

Thus, the preserving and protection of the packaged product would be seriously affected.

The above mentioned problem involves a lot of tightness controls, at the end of the packaging line, in order to monitor the seals and, consequently, to assure that the packaged product is suitably protected.

### SUMMARY OF THE INVENTION

Accordingly, the aim of the present invention is to solve the above mentioned problem, by providing a multiple-layer film to be hot coupled according to claim 1, which is adapted to provide an optimum and absolutely tight sealing for the packaged products, both in a permanently sealed arrangement and in a pealable arrangement.

Within the scope of the above mentioned aim, a main object of the present invention is to provide such multiple layer film which can be made by conventional bubble or flat head extruding methods, by using a single extruding die designed for extruding films including multiple coupled layers, depending on the use requirements.

Another object of the present invention is to provide such a multiple layer film which, owing to its specifically designed constructional features, is very reliable and safe in operation.

Yet another object of the present invention is to provide such a multiple-layer film which can be made starting from easily available materials and which, moreover, is very competitive from a mere economic standpoint.

According to one aspect of the present invention, the above mentioned aim and objects, as well as yet other objects, which will become more apparent hereinafter, are achieved by a multiple-layer film, to be hot coupled, either on-line and off-line or by an adhesive, to a support layer, characterized in that said multiple layer film comprises a base layer which can be coupled to a support layer and a sealing layer rigid with said base layer and adapted to provide sealing even in the presence of a contamination on the surface thereof.

### BRIEF DESCRIPTION OF THE DRAWINGS

Further characteristics and advantages of the present invention will become more apparent hereinafter from the following detailed disclosure of the preferred, though not exclusive, embodiment of a multiple-layer film which is illustrated, by way of an indicative, but not limitative, example in the accompanying drawings, where:

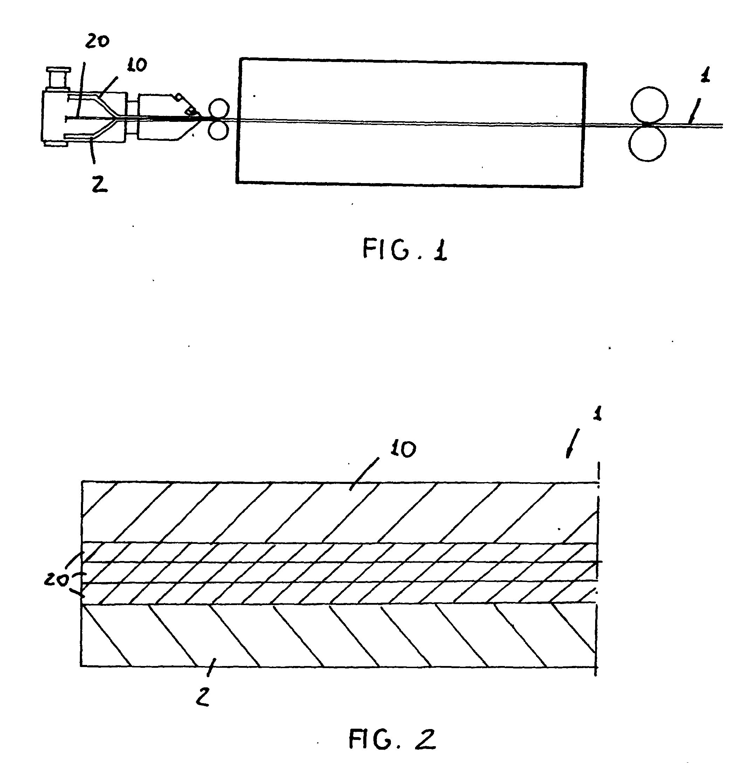

Figure 1 is a schematic view illustrating the method for making a possible embodiment of the multiple-layer film according to the present invention;
Figure 2 schematically illustrates a possible embodiment of the multiple-layer film according to the invention, as seen in cross section;
Figure 3 illustrates, by a layered type of illustration, the multiple-layer film according to the present invention; and

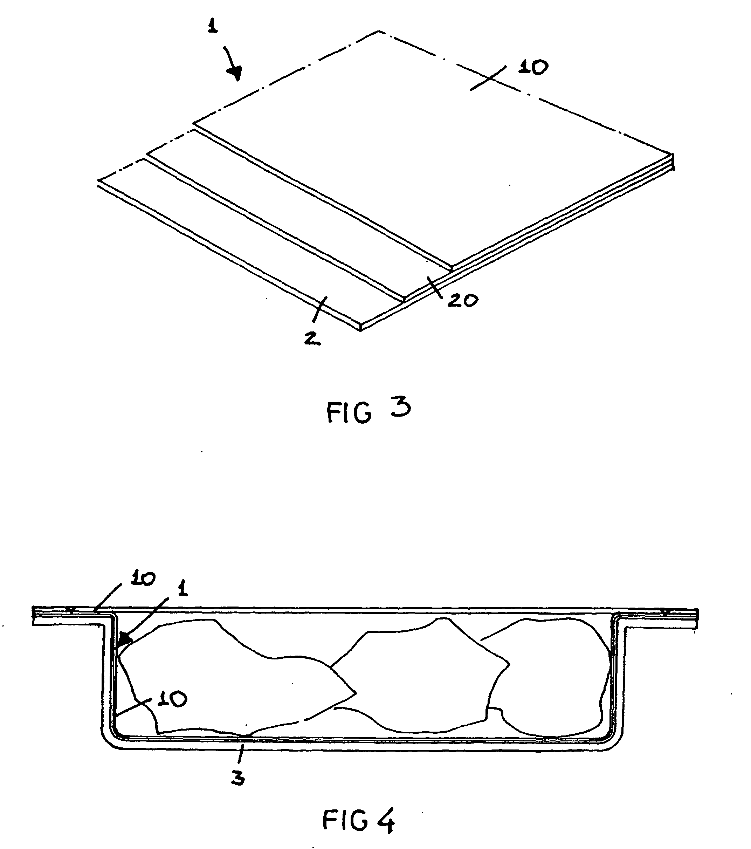

Figure 4 illustrates a package which can be made by using the multiple-layer film according to the invention.

### DESCRIPTION OF THE PREFERRED EMBODIMENTS

With reference to the number references of the above mentioned figures, the multiple-layer film, to be hot coupled on-line and off-line or by an adhesive, to a support layer, specifically designed for food vessels or packages and the like, according to the present invention, which has been generally indicated by the reference number 1, comprises a base layer, or self-adhesive bottom layer 2, which is made of thermoplastic and/or elastomeric materials allowing said base layer to be easily coupled to a support layer, indicated by the reference number 3, for making vessels or packages and the like.

The support layer 3 can also comprise another film material or a sheet material, and can be flexible, semirigid or rigid.

Said support layer can be hot coupled on the extruding or calendering line or it can be coupled off-line by an adhesive or heated cylinders, or also on films or sheets heated by any suitable heating process.

To provide the mentioned base layer 2, it is possible to use polyolefines, such as polyethylene and copolymers thereof, different types of polymerization products and catalyzers therefor; polyethylene polymers, polypropylene polymers and copolymers thereof, polybutylene, polyisobutylene, EVOH and the like.

Moreover, it is possible to use ionomers, styrene, polymers and copolymers such as SBS, SIS and the like, as well as hydrocarbon resins such as TACKIFY and the like, and polyamide, PET and the like.

The above mentioned raw materials can be used for making a bottom base layer as a single component of the mentioned base layer, or in any mixtures thereof or with other materials.

The multiple-layer film can also be made by using blowing extruding methods, such as bubble or double bubble blowing extruding methods, or a flat head extruding methods or, optionally, by an extrusion-coating method.

Advantageously, the base layer can be subjected to physical, chemical or chemical-physical treatments, for allowing said base layer to be coupled to the surface of the film to be coupled, forming the support layer 3.

The mentioned chemical-physical or chemical processing can comprise a corona processing method, or a flame processing method, or a spreading or induction method, by using any suitable types of adhesive materials.

Moreover, the spreading method can also be performed by acrylic adhesives.

The above mentioned processing methods allow the bottom base layer to be permanently coupled to the support layer 3, for making the desired vessel or package.

A main feature of the present invention is that with the base layer 2 is coextruded a sealing layer or top layer 10, comprising materials, and mixtures thereof, adapted to provide sealing even in a case of a contamination on the surface thereof, such as mixtures of ethylene copolymers of the type EVA, EBA, EMA and/or linear polyethylene, preferably made by metalocene catalyzers, having a density less than or equal to 0.925 g/cm³ and/or polyisobutene.

In the case of a sealing layer provided for a permanent sealing operation, the ratio of the mentioned mixtures and copolymers is of at least 40% the linear polyethylene, whereas, in the case of peeling film, for providing an easily openable sealing, the mentioned contents will be reduced to 10%, if it is used with ethylene copolymers or polyisobutene or other products having like physical-chemical characteristics.

In this connection it should be pointed out that the sealing layer can also comprise additives, such as natural or synthetic silica, erucamide, oleamide or other amides having a slipping effect.

Moreover, it is also possible to use additives such as titanium bioxide, barium sulphate, zinc sulphite.

The above mentioned additives can be present in a rate up to 25% by weight, depending on the type of additive and the characteristics to be obtained.

Moreover, it would be possible to use high molecular weight polyolefines.

The thus, the obtained film can be either optically transparent or, optionally, it can be made white or colored by adding to the base layer 2 titanium bioxide and/or calcium carbonate or other type of coloring materials.

Between the base laser 2 and sealing or outer layer 10, it is possible to arrange one or more intermetiate layers, indicated by the reference number 20, having different characteristics depending on the properties to be included in the laminated or coupled film.

From the above disclosure it should be apparent that the invention fully achieves the intended aim and objects.

In fact, the invention provides a multiple-layer film having very good sealing features, thereby providing in all conditions a perfectly tightly sealed vessel or package.

The invention, as disclosed, is susceptible to several modifications and variations, all of which will come within the scope of the inventive idea.

Moreover, in practicing the invention, all the component elements can be replaced by other technically equivalent elements.

## Claims

1. A multiple-layer film, either self-adhesive or not, for food packaging applications comprising a base layer (2) fixedly coupled to a support layer (3) and a sealing layer (10) sealable to said base layer, **characterized in that** said sealing layer is coextruded with said base layer and comprises mixtures of ethylene copolymers such as EVA, EBA, EMA and/or linear polyethylene in order to provide sealing even in the presence of contamination on the surface thereof.

2. A multiple-layer film, according to claim 1, **characterized in that** said film is made by a bubble or double bubble blowing extruding method.

3. A multiple-layer film, according to claim 1, **characterized in that** said film is made by a flat head extruding method.

4. A multiple-layer film, according to claim 1, **characterized in that** said film is made by an extrusion coating method.

5. A multiple-layer film, according to claim 1, **characterized in that** said base layer is subjected to physical, chemical or chemical-physical treatments, for causing it to adhere to the surface of said support layer.

6. A multiple-layer film, according to claim 5, **characterized in that** said chemical-physical or chemical treatment comprises a corona or flame treatment or an induction spreading adhesive treatment.

7. A multiple-layer film, according to claim 6, **characterized in that** the spreading treatment is performed by using acrylic adhesives.

8. A multiple-layer film, according to claim 1, **characterized in that** said base layer is made of thermoplastic and/or elastomeric materials.

9. A multiple-layer film, according to claim 8, **characterized in that** said thermoplastic and/or elastomeric materials comprise polyolefines.

10. A multiple-layer film, according to claim 9, **characterized in that** said polyolefines comprise polyethylene and copolymers thereof, terpolymers thereof either grafted or not, polypropylene and copolymers thereof, polybutylene, polyisobutylene, EVOH, polystyrene and copolymers thereof.

11. A multiple-layer film, according to claim 8, **characterized in that** said thermoplastic and/or elastomeric materials comprise ionomers, styrene polymers and copolymers, hydrocarbon resins, polyamide, PET.

12. A multiple-layer film, according to claim 1, **characterized in that** said linear polyethylene is preferably made by using metalocene catalyzers and has a density less than or equal to 0.925 g/cm².

13. A multiple-layer film, according to claim 1, **characterized in that** said sealing layer comprises at least 40% linear polyethylene.

14. A multiple-layer film, according to claim 1, **characterized in that** said sealing layer comprises up to 10% linear polyethylene together with ethylene copolymers or polyisobutene.

15. A multiple-layer film, according to claim 1, **characterized in that** said sealing layer comprises additives such as natural or synthetic sylica, erucamide, oleamide or other amides having a slipping effect, titanium dioxide, barium sulphate, and zinc sulphite.

16. A multiple-layer film, according to claim 15, **characterized in that** said additives are included in said sealing layer in a rate up to 25% by weight.

17. A multiple-layer film, according to claim 1, **characterized in that** said sealing layer is made of high molecular weight polyolefines.

18. A multiple-layer film, according to claim 1, **characterized in that** between said base layer and sealing layer at least a middle layer having different physical and functional characteristics is arranged.

19. A multiple-layer film, according to claim 1, **characterized in that** said film has an optically white color, transparent or any other color or color tone.

## Patentansprüche

1. Mehrschichtfilm, entweder selbstklebend oder nicht, für Lebensmittelverpackungsanwendungen, umfassend eine Grundschicht (2), die starr mit einer Tragschicht (3) gekuppelt ist, und eine Versiegelungsschicht (10), die mit der Grundschicht versiegelbar ist, **dadurch gekennzeichnet, daß** die Versiegelungsschicht mit der Grundschicht co-extrudiert ist und Mischungen aus Ethylen-Copolymeren wie EVA, EBA, EMA und/oder linearem Polyethylen umfaßt, um eine Versiegelung sogar bei Vorhandensein von Verschmutzung auf der Oberfläche davon vorzusehen.

2. Mehrschichtfilm nach Anspruch 1, **dadurch gekennzeichnet, daß** der Film durch ein Blasen- oder Zweiblasenextrusionsverfahren hergestellt ist.

3. Mehrschichtfilm nach Anspruch 1, **dadurch gekennzeichnet, daß** der Film durch ein Flachkopfextrusionsverfahren hergestellt ist.

4. Mehrschichtfilm nach Anspruch 1, **dadurch gekennzeichnet, daß** der Film durch ein Extrusionsbeschichtungsverfahren hergestellt ist.

5. Mehrschichtfilm nach Anspruch 1, **dadurch gekennzeichnet, daß** die Grundschicht einer physischen, chemischen oder chemisch-physischen Behandlung unterzogen ist, um zu bewirken, daß sie an der Oberfläche der Tragschicht anhaftet.

6. Mehrschichtfilm nach Anspruch 5, **dadurch gekennzeichnet, daß** die chemisch-physische oder chemische Behandlung eine Korona- oder Flammenbehandlung oder eine Induktionssprühkleberbehandlung umfaßt.

7. Mehrschichtfilm nach Anspruch 6, **dadurch gekennzeichnet, daß** die Sprühbehandlung unter Verwendung von Acryl-Klebern durchgeführt ist.

8. Mehrschichtfilm nach Anspruch 1, **dadurch gekennzeichnet, daß** die Grundschicht aus thermoplastischen und/oder elastomeren Materialien hergestellt ist.

9. Mehrschichtfilm nach Anspruch 8, **dadurch gekennzeichnet, daß** die thermoplastischen und/oder elastomeren Materialien Polyolefine umfassen.

10. Mehrschichtfilm nach Anspruch 9, **dadurch gekennzeichnet, daß** die Polyolefine Polyethylen und Copolymere davon, Terpolymere davon, entweder gepfropft oder nicht, Polypropylen und Copolymere davon, Polybutylen, Polyisobutylen, EVOH, Polystyrol und Copolymere davon umfassen.

11. Mehrschichtfilm nach Anspruch 8, **dadurch gekennzeichnet, daß** die thermoplastischen und/oder elastomeren Materialien Ionomere, Styrol-Polymere und -Copolymere, Kohlenwasserstoffharze, Polyamid, PET umfassen.

12. Mehrschichtfilm nach Anspruch 1, **dadurch gekennzeichnet, daß** das lineare Polyethylen vorzugsweise unter Verwendung von Metallocen-Katalysatoren hergestellt ist und eine Dichte von unter oder gleich 0,925 g/cm² aufweist.

13. Mehrschichtfilm nach Anspruch 1, **dadurch gekennzeichnet, daß** die Versiegelungsschicht zumindest 40 % lineares Polyethylen umfaßt.

14. Mehrschichtfilm nach Anspruch 1, **dadurch gekennzeichnet, daß** die Versiegelungsschicht bis zu 10 % lineares Polyethylen zusammen mit Ethylen-Copolymeren oder Polyisobuten umfaßt.

15. Mehrschichtfilm nach Anspruch 1, **dadurch gekennzeichnet, daß** die Versiegelungsschicht Zusätze wie natürliches oder synthetisches Silika, Erucamid, Oleamid oder andere Amide mit Gleitwirkung, Titandioxid, Bariumsulfat und Zinksulfid umfaßt.

16. Mehrschichtfilm nach Anspruch 15, **dadurch gekennzeichnet, daß** die Zusätze in einem Gehalt von bis zu 25 Gew.-% enthalten sind.

17. Mehrschichtfilm nach Anspruch 1, **dadurch gekennzeichnet, daß** die Versiegelungsschicht aus Polyolefinen mit hohem Molekulargewicht hergestellt ist.

18. Mehrschichtfilm nach Anspruch 1, **dadurch gekennzeichnet, daß** zwischen der Grundschicht und der Versiegelungsschicht zumindest eine Mittelschicht mit anderen physischen und funktionellen Kennzeichen angeordnet ist.

19. Mehrschichtfilm nach Anspruch 1, **dadurch gekennzeichnet, daß** der Film eine optisch weiße Farbe, transparente oder jegliche andere Farbe oder Farbton aufweist.

## Revendications

1. Film à couches multiples, aussi bien auto-adhésif que non, pour des applications d'emballages alimentaires, comprenant une couche de base (2) couplée de manière fixe à une couche de support (3) et à une couche d'étanchéité (10) hermétique à ladite couche de base, **caractérisé en ce que** ladite couche d'étanchéité est produite par co-extrusion avec ladite couche de base et comprend des mélanges de copolymères d'éthylène tels que EVA, EBA, EMA, et/ou polyéthylène linéaire dans le but de fournir une étanchéité même en présence d'une contamination de la surface de celui-ci.

2. Film à couches multiples, selon la revendication 1, **caractérisé en ce que** ledit film est fabriqué par un procédé d'extrusion par soufflage en bulle ou en double bulle.

3. Film à couches multiples, selon la revendication 1, **caractérisé en ce que** ledit film est fabriqué par un procédé d'extrusion à tête plate.

4. Film à couches multiples, selon la revendication 1, **caractérisé en ce que** ledit film est fabriqué par un procédé de revêtement par extrusion.

5. Film à couches multiples, selon la revendication 1, **caractérisé en ce que** ladite couche de base est soumise à des traitements physiques, chimiques ou physico-chimiques, afin de provoquer son adhérence à la surface de ladite couche de support.

6. Film à couches multiples, selon la revendication 5, **caractérisé en ce que** ledit traitement chimico-physique ou chimique comprend un traitement corona ou par flamme ou un traitement de dispersion adhésive par induction.

7. Film à couches multiples, selon la revendication 6, **caractérisé en ce que** le traitement de diffusion est réalisé en utilisant des adhésifs acryliques.

8. Film à couches multiples, selon la revendication 1, **caractérisé en ce que** ladite couche de base est fabriquée en matériaux thermoplastiques et/ou élastomères.

9. Film à couches multiples, selon la revendication 8, **caractérisé en ce que** lesdits matériaux thermoplastiques et/ou élastomères comprennent des polyoléfines.

10. Film à couches multiples, selon la revendication 9, **caractérisé en ce que** lesdites polyoléfines comprennent du polyéthylène et les copolymères de celui-ci, les terpolymères de celui-ci aussi bien greffés que non greffés, du polypropylène et les copolymères de celui-ci, du polybutylène, du polyisobutylène, EVOH, du polystyrène et les copolymères de celui-ci.

11. Film à couches multiples, selon la revendication 8, **caractérisé en ce que** lesdits matériaux thermoplastiques et/ou élastomères comprennent des ionomères, des polymères et copolymères de styrène, des résines d'hydrocarbures, du polyamide, PET.

12. Film à couches multiples, selon la revendication 1, **caractérisé en ce que** ledit polyéthylène est de préférence fabriqué en utilisant des catalyseurs d'alliage organométallique et présente une densité inférieure ou égale à 0,925 g/cm².

13. Film à couches multiples, selon la revendication 1, **caractérisé en ce que** ladite couche d'étanchéité comprend au moins 40% de polyéthylène linéaire.

14. Film à couches multiples, selon la revendication 1, **caractérisé en ce que** ladite couche d'étanchéité comprend jusqu'à 10% de polyéthylène ainsi que des copolymères d'éthylène ou du polyisobutène.

15. Film à couches multiples, selon la revendication 1, **caractérisé en ce que** ladite couche d'étanchéité comprend des additifs tels que la silice naturelle ou synthétique, érucamide, oléamide ou autres amides présentant un effet glissant, dioxyde de titane, sulfate de baryum, et sulfite de zinc.

16. Film à couches multiples, selon la revendication 15, **caractérisé en ce que** lesdits additifs sont compris dans ladite couche d'étanchéité à un taux jusqu'à 25% en poids.

17. Film à couches multiples, selon la revendication 1, **caractérisé en ce que** ladite couche d'étanchéité est fabriquée en polyoléfines à haut poids moléculaire.

18. Film à couches multiples, selon la revendication 1, **caractérisé en ce que** entre ladite couche de base et ladite couche d'étanchéité, au moins une couche intermédiaire possédant des caractéristiques physiques et fonctionnelles différentes est disposée.

19. Film à couches multiples, selon la revendication 1, **caractérisé en ce que** ledit film présente une couleur optique blanche, transparente ou tout autre type de couleurs ou nuances de couleurs.
